(19) Europäisches Patentamt
European Patent Office
Office européen des brevets

(11) Publication number: **0 141 268 B1**

(12) **EUROPEAN PATENT SPECIFICATION**

(45) Date of publication of patent specification: **13.06.90**

(51) Int. Cl.[5]: **C 08 L 69/00,** C 08 L 67/02, C 08 L 51/04

(21) Application number: **84111716.1**

(22) Date of filing: **01.10.84**

(54) **Composition of polycarbonate.**

(30) Priority: **03.10.83 US 538125**

(43) Date of publication of application:
**15.05.85 Bulletin 85/20**

(45) Publication of the grant of the patent:
**13.06.90 Bulletin 90/24**

(84) Designated Contracting States:
**DE FR GB IT NL**

(56) References cited:
**EP-A-0 105 388**
**US-A-4 180 494**
**US-A-4 226 961**
**US-A-4 280 948**
**US-A-4 320 212**

(73) Proprietor: **GENERAL ELECTRIC COMPANY**
**1 River Road**
**Schenectady New York 12305 (US)**

(72) Inventor: **Liu, Ping Yuan**
**124 Tanager court**
**Naperville Illinois 60565 (US)**

(74) Representative: **Catherine, Alain**
**General Electric France Service de Propriété Industrielle 18 Rue Horace Vernet**
**F-92136 Issy-Les-Moulineaux Cedex (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 141 268 B1

**Description**

The present invention relates to thermoplastic compositions having improved impact strength. More particularly, it relates to polycarbonate resin mixtures having improved room temperature impact strength and good compatibility.

Aromatic carbonate polymers are well known, commercially available materials having a wide variety of applications in the plastics art. Such carbonate polymers may be prepared by reacting a dihydric phenol, such as 2,2-bis(4-hydroxyphenyl) propane, with a carbonate precursor, such as phosgene, in the presence of an acid binding agent. Generally speaking, aromatic polycarbonate resins offer a high resistance to the attack of mineral acids, may be easily molded, are physiologically harmless as well as strain resistant. It is also well known that polycarbonate resins have high impact strength below a critical thickness of between 3.175 mm and 6.35 mm (1/8 and 1/4 inch). Above this average thickness the impact strength of polycarbonate resins is low and the failure mode is brittle. Moreover, the impact strength of polycarbonate resins decreases rapidly as the temperature decreases below about −5°C. and also after aging the polymers at elevated temperatures above about 100°C. These characteristics consequently limit the fields of application for unmodified aromatic polycarbonate resins.

Accordingly, in an effort to improve the impact resistant behavior of polycarbonate resins, it has been proposed to add modifiers to the polycarbonate. In US—A—3,431,224, for example, it is proposed to add modifiers, in certain proportions, the modifiers comprising at least one member of the class consisting of polyethylene, polypropylene, polyisobutylene, a copolymer of ethylene and an ethyl acrylate, a copolymer of ethylene and propylene, a cellulose ester, a polyamide, a polyvinyl acetal, an alkyl cellulose ester, and a polyethane elastomer. Although the results with such modifiers are generally excellent in thin sections, e.g., in parts of (1/8 inch) 3.175 mm thickness, there is a tendency for failure to occur with these modifiers in thicker moulded parts of (1/4 inch) 6.35 mm or more, and such failure is one of the undesirable brittle type.

In US—A—4,245,058 it is disclosed that compositions comprising a high molecular weight aromatic polycarbonate, an acrylate copolymer and a polyolefin exhibit improved aged impact strength, both low and high temperature impact strength and good weld line strength as compared with unmodified polycarbonate.

US—A—3,864,428 discloses compositions comprising blends of aromatic polyester, aromatic polycarbonate and butadiene based graft copolymers wherein the polycarbonate comprises from 10 to 75 weight percent of the overall blend which are said to possess good room temperature impact strength.

US—A—4,180,494 discloses high impact strength compositions comprising 25 to 95 percent by weight aromatic polyester, 1 to 8 percent by weight of an aromatic polycarbonate and the balance to make 100% of a core shell copolymer having a butadiene based core.

It has now been discovered that polycarbonate resins may be provided with enhanced room temperature impact strength in thin walled molded sections by incorporating therewith, in certain proportions, a poly (estercarbonate) copolymer and an impact modifier combination comprising a poly(ethylene terephthalate) resin or an amorphous copolyester resin and a thermoplastic interpolymer of a diene-vinyl aromatic copolymer and an acrylate or methacrylate comonomer.

It has now been found that when the abovementioned modifiers are added to the polycarbonate resin, within certain ranges, the resultant mixture possesses improved impact strength and good weld line strength at room temperatures when compared to unmodified polycarbonate resins.

In accordance with the present invention it has been found that the foregoing desirable properties are obtained with resin mixtures comprising an intimate blend of:

(a) 55 to 90 weight percent of a polycarbonate resin mixture comprising

(i) an aromatic polycarbonate resin; and

(ii) a copoly(estercarbonate) resin; and

(b) 10 to 45 weight percent of an impact modifier combination therefor comprising:

(i) a polyester resin selected from the group consisting of a poly(ethylene terephthalate) resin and an amorphous copolyester resin; and

(ii) a thermoplastic interpolymer of a diene vinyl aromatic copolymer and a monomer selected from at least one of a $C_1$—$C_6$ alkyl acrylate, a $C_1$—$C_6$ alkyl methacrylate, acrylic acid, methacrylic acid and mixtures of any of the foregoing monomers, alone or in further admixture with at least one monomeric compound selected from monomers containing a single vinylidene group.

The amounts of the modifiers to be employed may vary broadly but, in general, best results will be obtained when the compositions comprise from about 55 to 90 weight percent aromatic polycarbonate resin component (a) with the quantity (a)(i) varying from about 10 to 90 weight percent of (a), preferably 20 to 80 weight percent of (a). The quantity of (b) is from about 10—45 weight percent of (a) and (b). The quantity of (b)(ii) in (b) is from about 10 to about 40 weight percent.

The addition of the modifiers may be accomplished in any manner so long as a thorough distribution of the modifiers in the aromatic polycarbonate resin (a)(i) is obtained. Generally, the copoly(estercarbonate) is blended with the aromatic polycarbonate resin first to provide the polycarbonate resin mixture and thereafter the modifier combination is added, but this is not critical.

The mixing of these materials may be accomplished by a variety of methods normally employed for incorporation of plasticizers or fillers into thermoplastic polymers, including but not limited to, mixing rolls,

dough mixers, Banbury mixers, extruders, and other mixing equipment. The resulting mixtures may be handled in any conventional manner employed for the fabrication or manipulation of thermoplastic resins. The materials may be formed or molded using compression, injection, calendering, extrusion and blow molding techniques, alone or in any combination. Also multiprocessing methods, such as extrusion blow molding or co-extrusion-co-injection can be used, e.g., for multi-layer containers.

It should be understood that the resin mixtures prepared in accordance with the invention may also contain, in addition to the above-mentioned polymers, other additives to lubricate, reinforce, prevent oxidation, or lend color to the material. Other additives, such as mold release agents and stabilizers are well known in the art, and may be incorporated without departing from the scope of the invention.

The aromatic polycarbonate may be prepared by reacting a dihydric phenol with a carbonate precursor, such as phosgene, a haloformate or a carbonate ester. Generally speaking, such carbonate polymers may be typified as possessing recurring structural units of the formula:

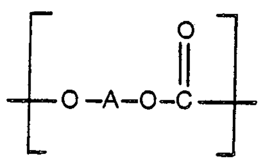

wherein A is a divalent aromatic radical of the dihydric phenol employed in the polymer producing reaction. Preferably, the carbonate polymers used to provide the resinous mixtures of the invention have an intrinsic viscosity (as measured in methylene chloride at 25°C) ranging from 0.30 to 1.00 dl/g. The dihydric phenols which may be employed to provide such aromatic carbonate polymers are mononuclear or polynuclear aromatic compounds, containing as functional groups two hydroxy radicals, each of which is attached directly to a carbon atom of an aromatic nucleus. Typical dihydric phenols are:

2,2-bis-(4-hydroxyphenyl)propane;
hydroquinone;
resorcinol;
2,2-bis-(4-hydroxyphenyl)pentane;
2,4'-(dihydroxydiphenyl)methane;
bis-(2-hydroxyphenyl)methane;
bis-(4-hydroxyphenyl)methane;
bis-(4-hydroxy-5-nitrophenyl)methane;
1,1-bis(4-hydroxyphenyl)ethane;
3,3-bis(4-hydroxyphenyl)pentane;
2,2-dihydroxydiphenyl;
2,6-dihydroxynaphthalene;
bis-(4-hydroxydiphenyl)sulfone;
bis-(3,5-diethyl-4-hydroxyphenyl)sulfone;
2,2-bis-(3,5-dimethyl-4-hydroxyphenyl)propane;
2,4'-dihydroxydiphenyl sulfone;
5'-chloro-2,4'-dihydroxydiphenyl sulfone;
bis-(4-hydroxyphenyl)diphenyl sulfone;
4,4'-dihydroxydiphenyl ether;
4,4'-dihydroxy-3,3'-dichlorodiphenyl ether;
4,4'-dihydroxy-2,5-dihydroxydiphenyl ether.

Other dihydric phenols which are also suitable for use in the preparation of the above polycarbonates are disclosed in U.S.—A—2,999,835; 3,038,365; 3,334,154; and 4,131,575.

These aromatic polycarbonates can be manufactured by known processes, such as, for example and as mentioned above, by reacting a dihydric phenol with a carbonate precursor, such as phosgene, in accordance with methods set forth in the above-cited literature and U.S.—A—4,018,750 and 4,123,436, or by transesterification processes such as are disclosed in U.S.—A—3,153,008, as well as other processes known to those skilled in the art.

It is possible to employ two or more different dihydric phenols or a copolymer of a dihydric phenol with a glycol or with a hydroxy- or acid-terminated polyester or with a dibasic acid in the event a carbonate copolymer or interpolymer rather than a homopolymer is desired for use in the preparation of the polycarbonate mixtures of the invention. Branched polycarbonates are also useful, such as are described in U.S.—A—4,001,184, also there can be utilized blends of a linear polycarbonate and a branched polycarbonate. Moreover, blends of any of the above materials may be employed in the practice of this invention to provide the aromatic polycarbonate. In any event, the preferred aromatic carbonate polymer for use as component (a)(i) herein is a homopolymer derived from 2,2-bis(4-hydroxylphenyl) propane (bisphenol-A).

The copoly(estercarbonate) copolymer resins (a)(ii) for use in the subject invention may generally be described as copolyesters comprising recurring carbonate groups,

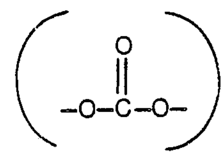 ,

carboxylate groups,

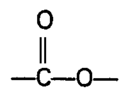 ,

and aromatic carbocyclic groups in the linear polymer chain, in which at least some of the carboxylated groups and at least some of the carbonate groups are bonded directly to ring carbon atoms of the aromatic carbocyclic groups. These poly(ester-carbonate) copolymers in general, are prepared by reacting, a difunctional carboxylic acid, a dihydric phenol and a carbonate precursor.

The dihydric phenols useful in formulating the poly(ester-carbonates) for use as component (a)(ii) herein may be represented by the general formula:

II 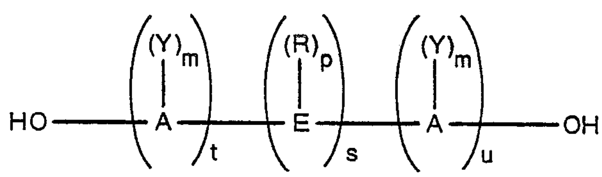

in which A is an aromatic group such as phenylene, biphenylene, naphthylene, anthrylene, etc. E may be an alkylene or alkylidene group such as methylene, ethylene, propylene, propylidene, isopropylidene, butylene, butylidene, isobutylidene, amylene, isoamylene, amylidene, isoamylidine, etc. Where E is an alkylene or alkylidene group, it may also consist of two or more alkylene or alkylidene groups, connected by a non-alkylene or nonalkylidene group such as an aromatic linkage, a tertiary amino linkage, an ether linkage, a carbonyl linkage, a silicon-containing linkage, or by a sulfur-containing linkage such as sulfide, sulfoxide, sulfone, etc. In addition, E may be a cycloaliphatic group (e.g. cyclopentyl, cyclohexyl), or a cycloalkylidene such as cyclohexylidene, a sulfur containing linkage, such as sulfide, sulfoxide or sulfone; an ether linkage; a carbonyl group; a tertiary nitrogen group, or a silicon containing linkage such as silane or siloxy. Other groups which E may represent will occur to those skilled in the art. R is hydrogen or a monovalent hydrocarbon group such as alkyl (methyl, ethyl, propyl, etc.), aryl (phenyl, naphthyl, etc.), aralkyl (benzyl, ethylphenyl, etc.) or cycloaliphatic (cyclopentyl, cyclohexyl, etc.). Y may be an inorganic atom such as chlorine, bromine, fluorine, etc; an inorganic group such as the nitro group, etc; an organic group such as R above, or an oxy group such as OR, it being only necessary that Y be inert to and unaffected by the reactants and the reaction conditions. The letter m is any whole number from and including zero through the number of positions on A available for substitution; p is any whole number from and including zero through the number of available positions on E; t is a whole number equal to at least one, S is either zero or one, and u is any whole number including zero.

In the dihydric phenol compound represented by Formula II above, when more than one Y substituent is present, they may be the same or different. The same is true for the R substituent. Where s is zero in Formula II and u is not zero, the aromatic rings are directly joined with no intervening alkylene or other bridge. The positions of the hydroxyl groups and Y on the aromatic nuclear residues A can be varied in the ortho, meta, or para positions and the groupings can be in a vicinal, asymmetrical or symmetrical relationship, where two or more ring carbon atoms of the aromatic hydrocarbon residue are substituted with Y and hydroxyl group.

Examples of dihydric phenol compounds that may be employed in this invention include
2,2-bis-(4-hydroxyphenyl)-propane (bisphenol-A);
2,4'-dihydroxydiphenylmethane;
bis-(2-hydroxyphenyl)-methane;
bis-(4-hydroxyphenyl)-methane;
bis-(4-hydroxy-5-nitrophenyl)-methane;
bis-(4-hydroxy-2,6-dimethyl-3-methoxyphenyl)-methane;
1,1-bis-(4-hydroxyphenyl)-ethane;
1,2-bis-(4-hydroxyphenyl)-ethane;

1,1-bis-(4-hydroxy-2-chlorophenyl)-ethane;
1,1-bis-(2,5-dimethyl-4-hydroxyphenyl)-ethane;
1,3-bis-(3-methyl-4-hydroxyphenyl)-propane;
2,2-bis-(3-phenyl-4-hydroxyphenyl)-propane;
2,2-bis-(3-isopropyl-4-hydroxyphenyl)-propane;
2,2-bis-(4-hydroxynaphthyl)-propane;
2,2-bis-(4-hydroxyphenyl)-pentane;
3,3-bis-(4-hydroxyphenyl)-pentane;
2,2-bis-(4-hydroxyphenyl)-heptane;
bis-(4-hydroxyphenyl)-phenylmethane;
bis-(4-hydroxyphenyl)-cyclohexylmethane;
1,2-bis-(4-hydroxyphenyl)1,2-bis-(phenyl)-propane;
2,2-bis-(4-hydroxyphenyl)-1-phenylpropane;

and the like. Also included are dihydroxybenzenes typified by hydroquinone and resorcinol, dihydroxydiphenyls such as 4,4′-dihydroxydiphenyl; 2,2′-dihydroxydiphenyl; 2,4′-dihydroxydiphenyl; dihydroxynaphthalenes such as 2,6-dihydroxynaphthalene, etc.

Also useful are dihydric phenols wherein E is a sulfur containing radical such as the dihydroxy aryl sulfones exemplified by: bis-(4-hydroxyphenyl) sulfone; 2,4′-dihydroxydiphenyl sulfone; 5-chloro-2,4′-dihydroxydiphenyl sulfone; 3-chloro-bis-(4-hydroxyphenyl) sulfone; and 4,4′-dihydroxytriphenyldisulfone; etc. The preparation of these and other useful sulfones are described in U.S.—A—2,288,282. Polysulfones as well as substituted sulfones using halogen, nitrogen, alkyl radicals, etc. are also useful.

Dihydroxy aromatic ethers such as those described in U.S.—A—3,148,172 are useful as the dihydric phenol herein. The dihydroxy aromatic ethers may be prepared as described in U.S.—A—2,739,171. Illustrative of such compounds are the following:

4,4′-dihydroxyphenyl ether;
4,4′-dihydroxytriphenyl ether;
the 4,3′-, 4,2′-, 2,2′-, 2,3′-, etc. dihydroxydiphenyl ethers;
4,4′-dihydroxy-2,6-dimethyldiphenyl ether;
4,4′-dihydroxy-2,5-dimethyldiphenyl ether;
4,4′-dihydroxy-3,3′-diisobutyldiphenyl ether;
4,4′-dihydroxy-3,3′-diisopropyldiphenyl ether;
4,4′-dihydroxy-3,3′-dinitrodiphenyl ether;
4,4′-dihydroxy-3,3′-dichlorodiphenyl ether;
4,4′-dihydroxy-3,3′-difluorodiphenyl ether;
4,4′-dihydroxy-2,3′-dibromodiphenyl ether;
4,4′-dihydroxydinaphthyl ether;
4,4′-dihydroxy-3,3′-dichlorodinaphthyl ether;
2,4-dihydroxytetraphenyl ether;
4,4′-dihydroxypentaphenyl ether;
4,4′-dihydroxy-2,6-dimethoxydiphenyl ether;
4,4′-dihydroxy-2,5-diethoxy-diphenyl ether, etc.

Mixtures of the dihydric phenols can also be employed and where dihydric phenol is mentioned herein, mixtures of such materials are considered to be included.

In general, any difunctional carboxylic acid or its reactive derivative such as the acid halide conventionally used in the preparation of polyesters may be used for the preparation of polyester-carbonates useful in formulating the compositions of the present invention. In general, the carboxylic acids which may be used include the aliphatic carboxylic acids, aliphatic-aromatic carboxylic acids, or aromatic carboxylic acids. The aromatic dicarboxylic acids or their reactive derivatives such as the aromatic diacid halides are preferred as they produce the aromatic polyester-carbonates which are most useful, from the standpoint of physical properties, in the practice of the instant invention.

These carboxylic acids may be represented by the general formula:

III $$R^2-\left(R^1\right)_q-COOH$$

wherein $R^1$ represents an alkylene, alkylidene or cycloaliphatic group in the same manner as set out above for E in Formula II; an alkylene, alkylidene or cycloaliphatic group containing ethylenic unsaturation; an aromatic radical such as phenylene, naphthylene, bisphenylene, substituted phenylene, etc.; two or more aromatic groups connected through non-aromatic linkages such as those defined by E in Formula II; or a divalent aliphatic-aromatic hydrocarbon radical such as an aralkyl or alkaryl radical. $R^2$ is either a carboxyl or a hydroxyl group. The letter q represents the integer one where $R^2$ is a hydroxyl group and either zero or one where $R^2$ is a carboxyl group. Thus the difunctional carboxylic acid will either be a monohydroxy monocarboxylic acid or a dicarboxylic acid. For purposes of the present invention the aromatic dicarboxylic

acids or their reactive derivatives such as, for example, the acid halides, are preferred. Thus in these preferred aromatic dicarboxylic acids, as represented by Formula III, $R^2$ is a carboxylic group and $R^1$ is an aromatic radical such as phenylene, biphenylene, napthylene, substituted phenylene, etc., two or more aromatic groups connected through non-aromatic linkages; or a divalent aliphatic-aromatic radical. Some nonlimiting examples of suitable preferred aromatic dicarboxylic acids which may be used in preparing the polyester-carbonate resins of the instant invention include phthalic acid, isophthalic acid, terephthalic acid, homophthalic acid, o-, m-, and p-phenylenediacetic acid, the polynuclear aromatic acids such as diphenic acid, and 1,4-naphthalic acid.

These acids may be used individually or as mixtures of two or more different acids.

The carbonate precursor may be either a carbonyl halide, a carbonate ester, or a haloformate. The carbonyl halides which can be employed herein are carbonyl chlorides and carbonyl bromide. Typical of the carbonate esters which may be employed herein are diphenyl carbonate, di(halophenyl) carbonates such as di(chlorophenyl) carbonate, di(bromophenyl)carbonate, di(trichlorophenyl)carbonate, di(tribromophenyl)carbonate, etc., di(alkylphenyl)carbonates such as di(tolyl)carbonate, etc., di(naphthyl)carbonate, di(chloronaphthyl)carbonate, phenyltolyl carbonate, chloronaphthyl chlorophenyl carbonate, and the like. The haloformates suitable for use herein include bishaloformates of dihydric phenols such as bischloroformates of hydroquinone, etc. or glycols such as bis-haloformates of ethylene glycol, neopentyl glycol, polyethylene glycol, etc. While other carbonate precursors will occur to those skilled in the art, carbonyl chloride, also known as phosgene is preferred.

The preparation of polyester-carbonates which may be employed in the compositions of the present invention is described in U.S.—A—3,030,331; 3,169,121; 3,207,814; 4,194,038 and 4,156,069.

The polyestercarbonates which are useful in the practice of the present invention include the aromatic polyestercarbonates derived from dihydric phenols, aromatic dicarboxylic acids or their reactive derivatives such as the aromatic diacid halides, and phosgene. A quite useful class of aromatic polyester-carbonates is that derived from bisphenol A, isophthalic acid, terephthalic acid, or a mixture of isophthalic acid and terephthalic acid, or the reactive derivatives of these acids such as terephthaloyl dichloride, isophthaloyl dichloride, or a mixture of isophthaloyl dichloride and terephthaloyl dichloride, and phosgene. The molar proportion of dihydroxydiaryl units to benzenedicarboxylate units to carbonate units can range from 1:0.30—0.90:0.70—0.10 and the molar range of terephthalate units to isophthalate units can range from 9:1 to 0.3:9.7.

The impact modifier combination (b) of the subject invention should be present in a minor proportion of the overall composition. Impact modifier combination (b) comprises (i) a polyester resin consisting essentially of a poly(ethylene terephthalate) resin or an amorphous copolyester resin. Firstly, with respect to the poly(ethylene terephthalate) resin, such resins are presently extremely well known in the art. The preparation of poly(ethylene terephthalate) resins, as well as other polyalkylene terephthalate resins, is amply described in U.S.—A—2,465,319 and in U.S.—A—3,047,539. Although poly(ethylene terephthalate) alone is preferred, and either virgin or scrap polymer may be used, other polyalkylene terephthalates such as poly(1,4-butylene terephthalate) or mixtures of polyalkylene terephthalates may be used in minor amounts.

In alternate embodiments, an amorphous copolyester resin may be utilized in place of the poly(ethylene terephthalate) resin as modifier component (b)(i) herein. The amorphous copolyester resin is a polyester copolymer which can, without limitation, comprise the reaction product of a glycol portion comprising 1,4-cyclohexanedimethanol and ethylene glycol, wherein the molar ratio of the 1,4-cyclohexanedimethanol to ethylene glycol in the glycol portion is from 4:1 to 1:4, with an acid portion comprising terephthalic acid, or isophthalic acid or mixtures of both acids.

The copolyester component (b)(i) may be prepared by procedures well known to those skilled in this art, such as by condensation reactions substantially as shown and described in U.S.—A—2,901,466. More particularly, the acid or mixture of acids or alkyl esters of the aromatic dicarboxylic acid or acids, for example dimethylterephthalate, together with the dihydric alcohols are charged to a flask and heated to temperatures sufficient to cause condensation of the copolymer to begin, for example to 175°—225°C. Thereafter the temperature is raised to about 250° to 300°C, and a vacuum is applied and the condensation reaction is allowed to proceed until substantially complete.

The condensation reaction may be facilitated by the use of a catalyst, with the choice of catalyst being determined by the nature of the reactants. The various catalysts for use herein are very well known in the art and are too numerous to mention individually. Generally, however, when an alkyl ester of the dicarboxylic acid compound is employed, an ester interchange type of catalyst is preferred, such as NaH $Ti(OC_4H_9)_6$ in n-butanol. If a free acid is being reacted with the free glycols, a catalyst is generally not added until after the preliminary condensation has gotten under way.

The reaction is generally begun in the presence of an excess of glycols and initially involves heating to a temperature sufficient to cause a preliminary condensation followed by the evaporation of excess glycol. The entire reaction is conducted with agitation under an inert atmosphere. The temperature can then be advantageously increased with or without the immediate application of a vacuum. As the temperature is further increased, the pressure can be advantageously greatly reduced and the condensation allowed to proceed until the desired degree of polymerization is achieved. The product can be considered finished at this stage or it can be subjected to further polymerization in the solid phase in accordance with well-known

techniques. Thus, the highly monomeric condensation product produced can be cooled, pulverized, and the powder heated to a temperature somewhat less than that employed during the last stage of the molten phase polymerization thereby avoiding coagulation of the solid particles. The solid phase polymerization is conducted until the desired degree of polymerization is achieved. The solid phase polymerization, among other things, results in a higher degree of polymerization without the accompanying degradation which frequently takes place when continuing the last stage of the melt polymerization at a temperature high enough to achieve the desired degree of polymerization. The solid phase process is advantageously conducted with agitation employing an inert atmosphere at either normal atmospheric pressure or under a greatly reduced pressure.

The copolyesters for use as component (b)(i) in the subject invention generally will have an internal viscosity of at least about 0.4 dl./gm. as measured in 60/40 phenol/tetrachloroethane or other similar solvent at about 25°C. and will have a heat distortion temperature of from about 60°C. to 70°C. The relative amounts of the 1,4-cyclohexanedimethanol to ethylene glycol in the glycol portion may vary so long as the molar ratio of 1,4-cyclohexanedimethanol to ethylene glycol is from 1:4 to 4:1, in order to provide a polyester copolymer having suitable properties and a heat distortion temperature within the recited range.

A preferred copolyester for use as the amorphous polyester copolymer component (b)(i) in the subject invention is a copolyester as described above wherein the glycol portion has a predominance of ethylene glycol over 1,4-cyclohexanedimethanol, for example greater than 50/50, and especially preferably is about 70 molar ethylene glycol to 30 molar 1,4-cyclohexanedimethanol and the acid portion is terephthalic acid. A preferred copolyester of this type is commercially available under the tradename KODAR PEGT 6763 from Eastman Chemical Company.

Modifier combination (b) also comprises as component (ii) a thermoplastic interpolymer of a diene-vinyl aromatic copolymer and an acrylic or methacrylic monomer alone or together with other monomers copolymerizable therewith which contains one vinylidene group. The interpolymer is a thermoplastic composition formed from a diene-vinyl aromatic copolymer latex and a monomeric material solely or preponderantly comprising a $C_1$—$C_6$ alkyl acrylate, a $C_1$—$C_6$ alkyl methacrylate, acrylic acid, methacrylic acid or mixtures of any of the foregoing, alone or with other monomers copolymerizable therewith having a single vinylidene group as the sole aliphatic carbon to carbon linkage polymerizably-reactive unsaturated group, said monomeric material or monomeric mixtures being interpolymerized with said copolymer by emulsion polymerization.

The diene-vinyl aromatic copolymers used to form the latex may comprise polymerized diene units e.g., units of butadiene, isoprene, 1,3-pentadiene, and the like, and polymerized units of vinyl aromatic compounds, e.g., styrene, alpha-methylstyrene, vinyl toluene, para-methylstyrene and the like. The preferred copolymer is a styrene-butadiene copolymer comprising 10 to 50% by weight of styrene and 90 to 50% by weight of butadiene, and having a molecular weight within the range of 25,000 to 1,500,000, and preferably within the range of 150,000 to 500,000. The copolymer solids are dispersed in water to form a latex having 15 to 75 parts by weight of solids. The copolymer latex of solids in water contains a dispersing agent such as sodium oleate or the like to maintain the copolymer in suspension. The $C_1$—$C_6$ alkyl acrylate, $C_1$—$C_6$ alkyl methacrylate, acrylic acid or methacrylic acid monomer or mixtures thereof, alone or further mixed with comonomers thereof, alone or further mixed with comonomers having a single vinylidene group such as acrylonitrile, vinylidene chloride, styrene or other similarly unsaturated compounds are added to the copolymer latex. The monomer is preferably methyl methacrylate or monomeric methyl methacrylate to the extent of at least 55%, and preferably as much as 75% by weight, in admixture with another of the above-mentioned monomers. The amount of monomer or monomeric mixture added for polymerization with the copolymer latex ranges from 65 to 85 parts by weight of the monomer mixture to 15 to 75 parts by weight of solids in the latex.

Interpolymerization of the monomer or monomeric mixture with the copolymer solids suspended in water is brought about in the presence of a free-radical generating catalyst and a polymerization regulator which serves as a chain transfer agent, at a temperature on the order of from 15°C to 80°C.

Any of the well known free radical generating catalysts which polymerize methyl methacrylate or acrylates per se may be utilized in the emulsion polymerization.

Suitable catalysts are, for example, those of the organic peroxide type, such as methyl ethyl ketone peroxide and benzoyl peroxide; those of the hydroperoxide type, such as cumene hydroperoxide; those of the persulfate type, such as potassium persulfate, or catalysts such as azoisobutyronitrile. Thus, the usual water-soluble as well as the monomer-soluble types of catalysts may be employed. Amounts of catalyst used are normally within the 0.05 to 0.5 parts by weight of the monomer used. Catalysts of the water-soluble type may be added to the diluted copolymer latex before the monomer is added, while catalysts soluble in the monomer are usually added thereto prior to bringing the monomer into contact with the latex.

Polymerization regulators suitable for use in the process are those organic sulfur compounds such as thioacids, high molecular weight mercaptans such as benzyl mercaptan, aliphatic mercaptans having at least six carbon atoms per molecule such as octyl, dodecyl and tertiary dodecyl mercaptan, mixtures of mercaptans such as are obtained for example from lauryl alcohol, nitrohydrazine, amino compounds, carbon tetrachloride and similar well known polymerization modifiers or regulators. Alkyl mercaptans of

low water solubility such as n-dodecyl mercaptan or tertiary dodecyl mercaptan are preferred. Amounts of modifier added to control the rate of polymerization may be within the range of 0.2 to 5% by weight of the monomer used. Addition of the modifier to the monomer prior to admixing the monomer with the latex is preferred.

The latices of butadiene-styrene, or other diene-vinyl aromatic copolymers normally contain a sufficient amount of dispersing agent such as sodium oleate, sodium lauryl sulfate or the like to maintain the copolymer in suspension in the liquid medium. Prior to addition of the monomer or monomer mixture to the latex, additional dispersing agent of the same or generally similar type is added to the latex. Thereafter the monomer, catalyst and polymerization regulator in admixture with the latex is emulsion polymerized in a suitable reactor under controlled temperature conditions of from 15° to 80°C. Coagulation of the interpolymerized product is then effected with a calcium chloride solution, for instance, whereupon it is filtered, washed and dried.

These materials may extend in physical properties from relatively rigid compositions to rubbery compositions. A preferred commercially available interpolymer of the kind described above is available under the tradename, Acryloid®KM 611, from Rohm & Haas Chemical Company. For additional information on these interpolymers and their preparation, reference may be made to U.S.—A—2,943,074 and 2,857,360.

The compositions of the subject invention may be prepared by dry blending the aromatic polycarbonate resin with the poly(estercarbonate) copolymer resin, and thereafter dry blending the impact modifier combination therewith until complete dispersion is obtained. The resin mixtures are then extruded and chopped to form pellets and thereafter molded in accordance with conventional methods. The extrusion and molding cycles should preferably be carried out at temperatures of below 274°C (525°F.) in order to obtain the maximum impact strength enhancement for the resin mixtures of the invention, because it has been observed that processing at temperatures in excess of about 287°C (550°F.) adversely effects the impact strength values of the subject compositions.

The resistance to impact failure of the polycarbonate resin mixture prepared in accordance with the subject invention was determined in accordance with the Notched Izod Impact Test, ASTM D256 on molded test specimens in the form of bars 6.35 cm × 1.27cm × 3.175 mm ($2\frac{1}{2}$" × $\frac{1}{2}$" × $\frac{1}{8}$"), the last dimension being the specimen thickness. The test specimens were mounted in accordance with ASTM D256 procedures and were tested at room temperature. Izod impact strengths were determined for all specimens according to ASTM D256 procedures on notched specimens.

In order that those skilled in the art may better understand how the present invention may be practiced, the following examples are given by way of illustration and not by way of limitation. All parts and percentages are by weight unless otherwise noted. The various polycarbonate resin mixtures were extruded in a Sterling extruder and molded in a (3 oz.) 85.05 g Van Dorn injection molding machine, the processing temperatures for each operation were as indicated below.

Examples 1—6

In the following examples many of the compositions prepared included a copolyestercarbonate copolymer, having an internal viscosity (i.V.) of about 0.5 dl/g as measured in methylene chloride at 30°C. This copolyestercarbonate copolymer was prepared as follows:

To a reactor vessel was added 16 liters of methylene chloride, 8 liters of water, 1906 grams (8.36 moles) of bisphenol A, 24 millimeters of triethylamine, 3.4 grams of sodium glyconate, and 65 grams of para-tertiary-butylphenol chain terminator. At a pH of between about 9—10.5, 1089.6 grams (5.37 moles) of a mixture of 15% by weight of isophthaloyl dichloride and 85% by weight of terephthaloyl dichloride in 2 liters of methylene chloride were added over a 10 minute interval while controlling the pH at about 9—10.5 with 35% aqueous caustic. After the addition of the diacid chloride mixture, phosgene was added at a rate of 36 grams per minute for 12 minutes while controlling the pH at about 10—11 with 35% aqueous caustic. The polymer mixture was diluted with 2 liters of methylene chloride and the brine phase was separated. The resulting polymer phase was washed once with 0.1 HCl and three times with water and was then recovered by high steam precipitation to yield a white powder. This preferred poly(ester-carbonate) copolymer has molar ratios of dihydroxy-diaryl units to benzene dicarboxylate units to carbonate units of about 1:0.6—0.75:0.4—0.25 and a molar ratio of terephthalate units to isophthalate units of about 8.5:1.5.

The following resin mixtures were prepared.

An aromatic polycarbonate resin derived from 2,2-bis(4-hydroxyphenyl)propane and having an intrinsic viscosity (iv) in the range of from about 0.46 to about 0.49 dl/g as determined in a methylene chloride solution at 25°C (LEXAN® 140, General Electric Company) was mixed with a poly(ester-carbonate) resin as described above (LEXAN®3250, General Electric Company) by mechanically mixing them in a laboratory tumbler until well mixed. Thereafter a poly(ethylene terephthalate) resin (scrap grade available from Goodyear) and a styrene-butadiene methyl methacrylate thermoplastic interpolymer (Acryloid®KM—611 Rohm & Haas Chemical Company) were added and all of the ingredients were mixed until dispersion of the additives was complete. The resulting mixture was fed to a Sterling extruder which was operated at the temperatures indicated. The resulting extrudates were comminuted into pellets. The pellets were injection molded into test specimens of 3.175 mm (1/8") thickness as described above. The Izod impact strengths of the samples measured are set forth in TABLE 1. The weld line strength of the samples was measured with the specimens prepared in a double gate mold in the same way as the notched Izod

samples. When polymer melt was injected through the gates, a weld line was formed in the center of the sample. Measurements were made according to ASTM D—256. The numerical superscripts indicate the percentage of test specimens which were ductile and the superscript H indicates that the sample failed in a hinged mode, which is an improvement over brittle failure. The samples labelled with letters were the aromatic polycarbonate containing no modifiers or an incomplete modifier combination as indicated. The formulations used and the results obtained are set forth in TABLE 1.

TABLE 1

Polycarbonate modified with a poly(ester-carbonate) copolymer poly(ethylene terephthalate) and a thermoplastic interpolymer of a styrene-butadiene copolymer and a methyl methacrylate monomer

| EXAMPLE COMPOSITION (pbw) | A | B | C | D | 1 | 2 | 3 | 4 | 5 | 6 |
|---|---|---|---|---|---|---|---|---|---|---|
| Aromatic polycarbonate[a] | 100 | 70 | 33 | 10 | 32 | 30 | 30 | 45 | 10 | 75 |
| Polyester-carbonate copolymer[b] | — | — | 33 | 10 | 32 | 30 | 30 | 40 | 75 | 10 |
| Poly(ethylene terephthalate)[c] | — | 30 | 33 | 75 | 32 | 30 | 30 | 10 | 10 | 10 |
| Thermoplastic interpolymer[d] of a styrene-butadiene copolymer and a methyl methacrylate monomer | — | | — | 5 | 4.0 | 10 | 10 | 5 | 5 | 5 |
| CONDITIONS | | | | | | | | | | |
| Extrusion temp., (°F.) °C | (540°) 282.2 | (540°) 282.2 | (540°) 282.2 | (540°) 282.2 | (540°) 282.2 | (540°) 282.2 | (540°) 282.2 | (540°) 282.2 | (540°) 282.2 | (540°) 282.2 |
| Molding temp., (°F.) °C | (500°) 260 | (500°) 260 | (500°) 260 | (500°) 260 | (500°) 260 | (500°) 260 | (500°) 260 | (500°) 260 | (500°) 260 | (500°) 260 |
| DTUL, at 1.81 MPa(264 psi), (°F.) °C | (265) 129.4 | | (240°) 115.5 | 176.9 80.5 | 248.3 120.16 | 251.0° 121.6 | 240.4° 115.7 | 277.3 136.3 | 285.4 140.7 | 262.7 128.2 |
| ROOM TEMP. IMPACT STRENGTH | | | | | | | | | | |
| 3.175 mm (1/8") notched Izod, (ft-lbs/in) J/cm | ($16^{100}$) $8.54^{100}$ | ($15^{100}$) $8^{100}$ | (2.0°) 1.06° | (0.3°) 0.16° | ($13.04^{100}$) $6.96^{100}$ | (3.11°) 1.66° | ($11.32^{100}$) $6.04^{100}$ | (8.6°) 4.59° | ($6.3^{100H}$) $3.36^{100H}$ | ($11.7^{100}$) $6.24^{100}$ |
| 3.175 mm (1/8) D.G. unnotched Izod, (ft. lbs/in.) J/cm | $>40^{100}$ $>21.35^{100}$ | | 4.0° 2.13° | 3.8° 2.03° | $13.87^{20}$ $7.4^{20}$ | 12.10° 6.46° | $9.0^{40}$ $4.5^{40}$ | 12.2° 6.51° | 17.6° 9.39° | 27.0 14.41 |

a. LEXAN®, General Electric Company.
b. LEXAN® 3250, General Electric Company.
c. scrap poly(ethylene terephthalate), Goodyear Company.
d. ACRYLOID® KM 611, Rohm & Haas Chemical Company.

These data illustrate the overall impact strength improvement exhibited by compositions prepared within the scope of the subject invention over unmodified aromatic polycarbonate resins as well as each of the controls, compositions B—D, wherein some or all of the impact modifiers are not present.

A comparison of Example 2 and Example 3 clearly illustrates the adverse effect which elevated processing temperatures, i.e., molding temperatures in excess of 273.9°C (525°F.), can have on the impact strength of these compositions. In Example 2 where a molding temperature of 287.8°C (550°F.) was used, the impact resistance properties were more than three times less than those obtained for an identical composition molded at 260°C (500°F.), Example 3.

In addition these data illustrate the overall improvement in impact strength provided by compositions of the subject invention over a broad composition range. More particularly, when Example 6, having an extreme composition range is compared with Examples 1—4 having more intermediate amounts of the components, these data illustrate that equally excellent impact strength improvement are obtained.

Although the subject invention has been described with reference to certain preferred embodiments, many obvious modifications or changes may be made therein or will suggest themselves to those skilled in the art. For example, instead of a bisphenol-A polycarbonate, one containing units derived from tetramethylbisphenol-A or from dixylenol sulfone can be used. Instead of a poly(ester-carbonate) based on terephthalate and isophthalate units, naphthanate units may be substituted for either. Instead of an interpolymer having a butadiene-styrene copolymer base, an isoprene-styrene copolymer may be used, to name but a few of the variations possible.

**Claims**

1. A resin mixture comprising an intimate blend of:
(a) 55 to 90 weight percent of a polycarbonate resin mixture comprising:
 (i) an aromatic polycarbonate resin; and
 (ii) a poly(ester-carbonate) copolymer resin; and
(b) 10 to 45 weight percent of an impact modifier combination therefor comprising:
 (i) a polyester resin selected from the group consisting essentially of a poly(ethylene terephthalate) resin and an amorphous copolyester resin; and
 (ii) a thermoplastic interpolymer of a diene-vinyl aromatic copolymer and a monomer selected from at least one of a $C_1$—$C_6$ alkyl acrylate, a $C_1$—$C_6$ alkyl methacrylate, acrylic acid, methacrylic acid, and mixtures of any of the foregoing, alone or further in admixture with at least one other monomeric compound selected from monomers containing a single vinylidene group.

2. A resin mixture as defined in Claim 1 wherein the aromatic polycarbonate resin (a)(i) comprises recurring structural units of the formula:

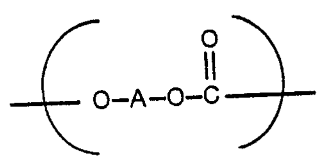

wherein A is a divalent aromatic radical of a dihydric phenol.

3. A resin mixture as defined in Claim 2 wherein in said formula, A is derived from a 4,4'-dihydroxydi(mononuclear) aryl alkane.

4. A resin mixture as defined in Claim 1 wherein said aromatic polycarbonate resin (a)(i) comprises poly(2,2-dihydroxydiphenylpropane) carbonate.

5. A resin mixture as defined in Claim 1, wherein the poly(ester-carbonate) copolymer component (b)(ii) is derived from (a) a dihydric phenol; (b) at least one aromatic dicarboxylic acid or a reactive derivative thereof; and (c) a carbonate precursor.

6. A resin mixture as defined in Claim 5 wherein the poly(ester carbonate) copolymer is derived from bisphenol-A, terephthaloyldichloride, isophthaloyldichloride, and phosgene, wherein the molar ratios of dihydroxy-diaryl units to benzene dicarboxylate units to carbonate units is from 1:0.6—0.75:0.4—0.25 and the molar ratio of terephthalate units to isophthalate units is about 8.5:1.5.

7. A resin mixture as defined in Claim 1 wherein in said impact modifier combination component (b)(i) comprises poly(ethylene terephthalate).

8. A resin mixture as defined in Claim 1, wherein in said impact modifier combination, component (b)(i) comprises an amorphous copolyester copolymer resin.

9. A resin mixture as defined in Claim 8 wherein said amorphous copolyester copolymer resin comprises a polyester copolymer derived from
 (i) a glycol portion comprising 1,4-cyclohexanedimethanol and ethylene glycol wherein the molar ratio of 1,4-cyclohexanedimethanol to ethylene glycol is from 1:4 to 4:1, respectively; and
 (ii) an acid portion comprising an aromatic dicarboxylic acid selected from the group consisting essentially of terephthalic acid, isophthalic acid and mixtures of the two acids.

10. A resin mixture as defined in Claim 8 wherein said amorphous copolyester copolymer comprises a poly((0.7)ethylene-co-(0.3)-1,4-cyclohexanedimethylene terephthalate).

11. A resin mixture as defined in Claim 1, wherein in said thermoplastic interpolymer, the diene-vinyl aromatic copolymer comprises polymerized diene units selected from the group consisting essentially of butadiene, isoprene and 1,3-pentadiene and polymerized units of a vinyl aromatic compound selected from the group consisting essentially of styrene, alpha-methylstyrene, vinyl toluene, and paramethylstyrene.

12. A resin mixture as defined in Claim 1 wherein in said thermoplastic interpolymer said diene-vinyl aromatic copolymer comprises a styrene-butadiene copolymer comprising from 90 to 50% by weight of butadiene and from 10 to 50% by weight of styrene, said copolymer having a molecular weight within the range of 25,000 to 1,500,000.

13. A resin mixture as defined in Claim 1, wherein in said thermoplastic interpolymer said monomer is selected from the group consisting essentially of methyl methacrylate and a monomeric mixture comprising at least 55% by weight methyl methacrylate in admixture with another monomer selected from acrylonitrile, vinylidene chloride and styrene.

14. A resin mixture as defined in Claim 1 wherein in said thermoplastic interpolymer, the diene-vinyl aromatic copolymer comprises from 10 to 75 parts by weight and said monomer comprises from 65 to 85 parts by weight, based upon the total weight of said interpolymer.

15. An article molded from the composition of Claim 1.

**Patentansprüche**

1. Harzmischung enthaltend eine innige Mischung aus:
(a) 55 bis 90 Gew.-% einer Polycarbonatharzmischung enthaltend
(I) ein aromatische Polycarbonatharz; und
(II) ein Poly(estercarbonat)copolymerharz und
(b) 10 bis 45 Gew.-% einer die Schlagfestigkeit modifizierenden Kombination dafür enthaltend:
(I) ein Polyesterharz ausgewählt aus der Gruppe bestehend im wesentlichen aus einem Poly(äthylenterephthalat)harz und einem amorphen Copolyesterharz und
(II) einem thermoplastischen Interpolymeren aus einem dienvinylaromatischen Copolymeren und einem Monomeren ausgewählt aus wenigstens einem $C_1$—$C_6$ Alkylacrylat, einem $C_1$—$C_6$ Alkylmethacrylat, Acrylsäure, Methacrylsäure und Mischungen aus beliebigen der vorgenannten Stoffe allein oder weiter in Mischung mit wenigstens einer anderen monomeren Verbindung ausgewählt aus Monomeren enthaltend eine einzige Vinylidengruppe.

2. Harzmischung nach Anspruch 1, worin das aromatische Polycarbonatharz (a) (I) wiederkehrende Struktureinheiten der Formel

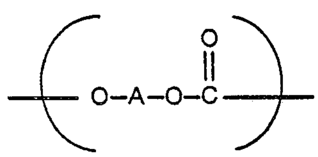

umfaßt, worin A ein zweiwertiger aromatischer Rest eines zweiwertigen Phenols ist.

3. Harzmischung nach Anspruch 2, worin in der Formel A abgeleitet ist von einem 4,4'-Dihydroxy-di(einkernigen)-arylalkan.

4. Harzmischung nach Anspruch 1, worin das aromatische Polycarbonatharz (a) (I) Poly(2,2-dihydroxy-diphenylpropan)-carbonat umfaßt.

5. Harzmischung nach Anspruch 1, worin die Poly(ester-carbonat)-copolymerkomponente (b) (II) abgeleitet ist von
(a) einem zweiwertigen Phenol,
(b) wenigstens einer aromatischen Dicarbonsäure oder einem reaktionsfähigen Derivat derselben und
(c) einem Carbonatvorläufer.

6. Harzmischung nach Anspruch 5, worin das Poly(ester-carbonat)-copolymere abgeleitet ist von Bisphenol-A, Terephthaloyldichlorid, Isophthaloyldichlorid und Phosgen, worin die Molverhältnisse der Dihydroxy-Diaryleinheiten zu den Benzoldicarboxylateinheiten zu den Carbonateinheit von 1:0,6—0,75:0,4—0,25 betragen und das Molverhältnis der Terephthalateinheiten zu den Isophthalateinheiten etwa 8,5:1,5 beträgt.

7. Harzmischung nach Anspruch 1, worin in der Kombination zur Modifizierung der Schlagfestigkeit die Komponente (b) (I) Poly(äthylen-therephthalat) enthält.

8. Harzmischung nach Anspruch 1, worin in der Kombination zur Modifizierung der Schlagsfestigkeit die Komponente (b) (I) ein amorphes Copolyestercopolymerharz umfaßt.

9. Harzmischung nach Anspruch 8, worin das amorphe Copolyestercopolymerharz ein Polyestercopolymer enthält, welches abgeleitet ist von
(I) einem Glykolanteil enthaltend 1,4-Cyclohexandimethanol und Äthylenglykol, worin das Molverhältnis von 1,4-Cyclohexandimethanol zu Äthylenglykol von jeweils 1:4 bis 4:1 beträgt, und

(II) einem Säureanteil enthaltend eine aromatische Dicarbonsäure ausgewählt aus der Gruppe bestehend im wesentlichen aus Terephthalsäure, Isophthalsäure und Mischungen dieser beiden Säuren.

10. Harzmischung nach Anspruch 8, worin das amorphe Copolyestercopolymer ein Poly((0,7)äthylen-co-(0,3)-1,4-cyclohexandimethylenterephthalat) umfaßt.

11. Harzmischung nach Anspruch 1, worin in dem thermoplastischen Interpolymeren das dienvinylaromatische Copolymere polymerisierte Dieneinheiten enthält ausgewählt aus der Gruppe bestehend im wesentlichen aus Butadien, Isopren und 1,3-Pentadien und polymerisierten Einheiten aus einer vinylaromatischen Verbindung, ausgewählt aus der Gruppe bestehend im wesentlichen aus Styrol, Alphamethylstyrol, Vinyltoluol und Paramethylstyrol.

12. Harzmischung nach Anspruch 1, worin in dem thermoplastischen Interpolymeren das dienvinylaromatische Copolymere ein Styrolbutadiencopolymer aus 90 bis 50 Gew.-% Butadien und 10 bis 50 Gew.-% Styrol enthält, wobei das Copolymere ein Molekulargewicht im Bereich von 25.000 bis 1.500.000 aufweist.

13. Harzmischung nach Anspruch 1, worin in dem thermoplastischen Interpolymeren das Monomere ausgewählt ist aus der Gruppe bestehend im wesentlichen aus Methylmethacrylat und einer monomeren Mischung enthaltend wenigstens 55 Gew.-% Methylmethacrylat in Mischung mit einem anderen Monomeren ausgewählt aus Acrylnitril, Vinylidenchlorid und Styrol.

14. Harzmischung nach Anspruch 1, worin in dem thermoplastischen Interpolymeren das dienvinylaromatische Copolymere 10 bis 75 Gewichtsteile und das Monomere 65 bis 85 Gewichsteile bezogen auf das Gesamtgewicht des Interpolymeren umfaßt.

15. Gegenstand, der aus der Zusammensetzung nach Anspruch 1 ausgeformt worden ist.

**Revendications**

1. Mélange de résines comprenant un mélange intime de:

(a) de 55 à 90% en poids d'un mélange de résines de polycarbonate comprenant:

(i) une résine de polycarbonate aromatique; et

(ii) une résine de copolymère de poly(ester-carbonate); et

(b) de 10 à 45% en poids d'une combinaison d'agents de modification de la résistance au choc de ce mélange comprenant:

(i) une résine de polyester choisi dans le groupe constitué essentiellement par une résine de poly(téréphtalate d'éthylène) et une résine de copolyester amorphe; et

(ii) un interpolymère thermoplastique d'un copolymère diène-composé vinylique aromatique et d'un monomère choisi parmi au moins un acrylate d'alkyle en $C_1$—$C_6$, un méthacrylate d'alkyle en $C_1$—$C_6$, l'acide acrylique, l'acide méthacrylique et des mélanges de n'importe lesquels des monomères précédents, seuls ou encore en mélange avec au moins un autre composé monomèrique choisi parmi des monomères contenant un seul groupe vinylidène.

2. Mélange de résines selon la revendication 1, dans lequel la résine de polycarbonate aromatique (a) (i) comprend des mailles récurrentes répondant à la formule:

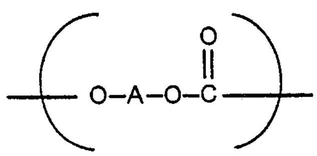

dans laquelle A représente un radical aromatique divalent d'un diphénol.

3. Mélange de résines selon la revendication 2, dans lequel dans la formule, A est dérivé d'un dihydroxy-4,4'-diaryl(mononucléaire)alkane.

4. Mélange de résines selon la revendication 1, dans lequel la résine de polycarbonate aromatique (a) (i) se compose de poly(carbonate de dihydroxydiphényl-2,2-propane).

5. Mélange de résines selon la revendication 1, dans lequel le composant de copolymère de poly(ester-carbonate) (b) (ii) est dérivé de (a) un diphénol; (b) au moins un acide dicarboxylique aromatique ou un de ses dérivés réactifs; et (c) un précurseur de carbonate.

6. Mélange de résines selon la revendication 5, dans lequel le copolymère de poly(ester-carbonate) est dérivé du bisphénol-A, du dichlorure de téréphtaloyle, du dichlorure d'isophtaloyle, et du phosgène, les rapports molaires des motifs dihydroxydiaryles aux motifs benzènedicarboxylates aux motifs carbonates étant de 1:0,6—0,75:0,4—0,25 et le rapport molaire des motifs téréphtalates aux motifs isophtalates étant d'environ 8,5:1,5.

7. Mélange de résines selon la revendication 1, dans lequel dans la combinaison d'agents de modification de la résistance au choc, le composant (b) (i) se compose de poly(téréphtalate d'éthylène).

8. Mélange de résines selon la revendication 1, dans lequel dans la combinaison d'agents de modification de la résistance au choc, le composant (b) (i) se compose d'une résine de copolymère de copolyester amorphe.

9. Mélange de résines selon la revendication 8, dans lequel la résine de copolymère de copolyester

amorphe se compose d'un copolymère de polyester dérivé de

(i) une partie glycol comprenant du cyclohexanediméthanol-1,4 et de l'éthylèneglycol, le rapport molaire du cyclohexanediméthanol-1,4 à l'éthylèneglycol étant respectivement compris entre 1:4 et 4:1; et

(ii) une partie acide comprenant un acide dicarboxylique aromatique choisi dans le groupe constitué essentiellement par l'acide téréphtalique, l'acide isophtalique et des mélanges de ces deux acides.

10. Mélange de résines selon la revendication 8, dans lequel le copolymère de copolyester amorphe se compose d'un poly(téréphtalate d'éthylène (0,7)-co-cyclohexane-diméthylène-1,4 (0,3)).

11. Mélange de résines selon la revendication 1, dans lequel dans l'interpolymère thermoplastique, le copolymère diène-composé vinylique aromatique comprend des motifs diènes polymérisés choisis dans le groupe constitué essentiellement par le butadiène, l'isoprène et le pentadiène-1,3 et des motifs polymérisés d'un composé aromatique vinylique choisi dans le groupe constitué essentiellement par le styrène, l'alpha-méthylstyrène, le vinyltoluène et le paraméthylstyrène.

12. Mélange de résines selon la revendication 1, dans lequel dans l'interpolymère thermoplastique, le copolymère diène-composé aromatique vinylique se compose d'un copolymère styrène-butadiène comprenant de 90 à 50% en poids de butadiène et de 10 à 50% en poids de styrène, ce copolymère présentant une masse molaire comprise entre 25.000 et 1.500.000.

13. Mélange de résines selon la revendication 1, dans lequel, dans l'interpolymère thermoplastique, le monomère est choisi dans le groupe constitué essentiellement par le méthacrylate de méthyle et un mélange monomèrique comprenant au moins 55% en poids de méthacrylate de méthyle en mélange avec un autre monomère choisi parmi l'acrylonitrile, le chlorure de vinylidène et le styrène.

14. Mélange de résines selon la revendication 1, dans lequel dans l'interpolymère thermoplastique, le copolymère diène-composé aromatique vinylique représente de 10 à 75 parties en poids et le monomère représente de 65 à 85 parties en poids, exprimé par rapport au poids total de l'interpolymère.

15. Objet moulé à partir de la composition selon la revendication 1.